# EUROPEAN PATENT APPLICATION

(11) **EP 4 283 256 A1**
(43) Date of publication of application: **29.11.2023**
(21) Application number: 23174190.1
(22) Date of filing: 18.05.2023
(51) Int. Cl.: G01C 21/00, B60G 17/0165, B60W 40/06, G06F 3/16, H04R 19/04

(54) **SYSTEMS AND METHODS FOR DETECTING ROAD SURFACE CONDITION**

(30) Priority: 23.05.2022 US 202263365195 P
(71) Applicant: TuSimple, Inc., San Diego, CA 92122 (US)
(72) Inventor: Duan, Pengji, San Diego, 92122 (US); Ding, Yusheng, San Diego, 92122 (US); Hsu, Yu-Ju, San Diego, 92122 (US)
(74) Representative: Hamer, Thomas Daniel

(57) **Abstract**

Disclosed are devices, systems and methods for detecting road surface conditions. One exemplary system installed in a vehicle comprises: an audio sensor configured to receive audio signals associated with an environment surrounding the vehicle; a location sensor configured to detect a location of the vehicle; a digital signal processor communicatively coupled to the audio sensor and configured to estimate an estimated road surface condition based on the audio signals received from the audio sensor; a data storage communicatively coupled to the digital signal processor and the location sensor and configured to store the estimated road surface condition with corresponding location information; and a control element communicatively coupled to the data storage and configured to control a driving of the vehicle based on the estimated road surface condition.

## Description

### TECHNICAL FIELD

This document relates to tools (systems, apparatuses, methodologies, computer program products, etc.) for semi-autonomous and autonomous control of vehicles, and more particularly, road surface condition detecting techniques.

### BACKGROUND

Autonomous vehicle navigation is a technology for sensing the position and movement of a vehicle and, based on the sensing, autonomously controlling the vehicle to navigate towards a destination. Autonomous vehicle navigation can have important applications in transportation of people, goods and services. In order to ensure the safety of the vehicle, as well as people and property in the vicinity of the vehicle, autonomous algorithms implemented by these applications, various measurement data is obtained.

### SUMMARY

Disclosed are devices, systems and methods for detecting road surface conditions. The disclosed technology can be applied to improve the accuracy of detecting road surface conditions, which can allow to control vehicles more efficiently based on the detected road surface conditions.

In one aspect, system installed in a vehicle comprises: an audio sensor configured to receive audio signals associated with an environment surrounding the vehicle; a location sensor configured to detect a location of the vehicle; a digital signal processor communicatively coupled to the audio sensor and configured to estimate an estimated road surface condition based on the audio signals received from the audio sensor; a data storage communicatively coupled to the digital signal processor and the location sensor and configured to store the estimated road surface condition with corresponding location information; and a control element communicatively coupled to the data storage and configured to control a driving of the vehicle based on the estimated road surface condition.

In another aspect, a method of detecting a road surface condition is provided. The method comprises: determining an estimated road surface condition based on audio signals collected from an audio sensor mounted on a vehicle; configuring data sets including the estimated road surface condition associated with a corresponding location information; and controlling a driving of the vehicle based on the data sets.

In another aspect, a system of detecting a road surface condition is provided. The system comprises: a processor; and a memory that comprises instructions stored thereon, wherein the instructions, when executed by the processor, configure the processor to: collect audio signals associated with an environment surrounding the vehicle; determine, based on the audio signals, an estimated road surface condition corresponding to a location of the vehicle; and configure data sets including the estimated road surface condition associated with corresponding location information.

In another aspect, the above-described method is embodied in a non-transitory computer readable storage medium. The non-transitory computer readable storage medium includes code that when executed by a processor, causes the processor to perform the methods described in this patent document.

In yet another exemplary embodiment, a device that is configured or operable to perform the above-described methods is disclosed.

The above and other aspects and features of the disclosed technology are described in greater detail in the drawings, the description and the claims.

### BRIEF DESCRIPTION OF THE DRAWINGS

FIG. 1 shows an example of a schematic diagram of a road surface condition detection system of a truck based on some implementations of the disclosed technology.
FIG. 2 shows an example of a noise filtering unit and a road condition classifier that are included in a road surface condition detection system based on some implementations of the disclosed technology.
FIG. 3 shows an example diagram that illustrates a vehicle control unit of a road surface detection system based on some implementations of the disclosed technology.
FIGS. 4 and 5 show example methods for detecting a road surface condition based on some implementations of the disclosed technology.
FIG. 6 shows an example of a hardware platform that can implement some techniques described in the present document.

### DETAILED DESCRIPTION

Various implementations of the disclosed technology provide systems and methods for detecting road surface conditions. The transportation industry has been undergoing considerable changes in the way technology is used to improve a driving safety. The road surface conditions can play a decisive role in the impact of the driving safety. Especially, in the severe weather conditions such as rain, snow and fog, the detectability of road surface conditions can have a significant impact on several aspects of an unmanned aerial vehicle (UAV) system, including vehicle control, NPC (non-player character)'s route prediction, and safe braking distance. In addition, with the developments and popularity of an autonomous or semi-autonomous driving, knowledge of the road surface condition can also assist in optimizing trajectories or vehicle operation parameters to ensure the driving safety. For example, autonomous and semi-autonomous vehicles need to be aware of road surface conditions to automatically adapt vehicle speed or keep a safe distance to the vehicle in front.

The currently available system for detecting the road surface conditions include cameras, Radio Detection And Ranging (RADAR) sensors, Light Detection And Ranging (LIDAR) senses to provide some information about the road surface condition. The cameras, the RADAR sensors, and the LIDAR sensors, however, have limited capabilities to obtain the information related to the road surface conditions. Thus, the accuracy of detecting the road surface condition based on the outputs provided from the cameras, the RADAR sensors, and the LIDAR sensors decrease significantly in poor lightning conditions (e.g., night, fog, smoke). The currently available detection systems based on those imaging and perception sensors (e.g., cameras, RADAR sensors, LIDAR sensors) do not provide a consistent level of detectability for the road surface conditions.

In recognition of the issues above in the currently available detection system for the road surface conditions and also importance of the knowledge of the road surface conditions for the autonomous or semi-autonomous driving, various implementations of the disclosed technology provide systems and methods for detecting road surface conditions that can improve the accuracy of detecting road surface conditions. Various implementations of the disclosed technology suggest detecting road surface conditions by using audio signals. Using the audio signals to identify hazardous situations, it is possible to improve the accuracy and reliability of detecting the road surface conditions.

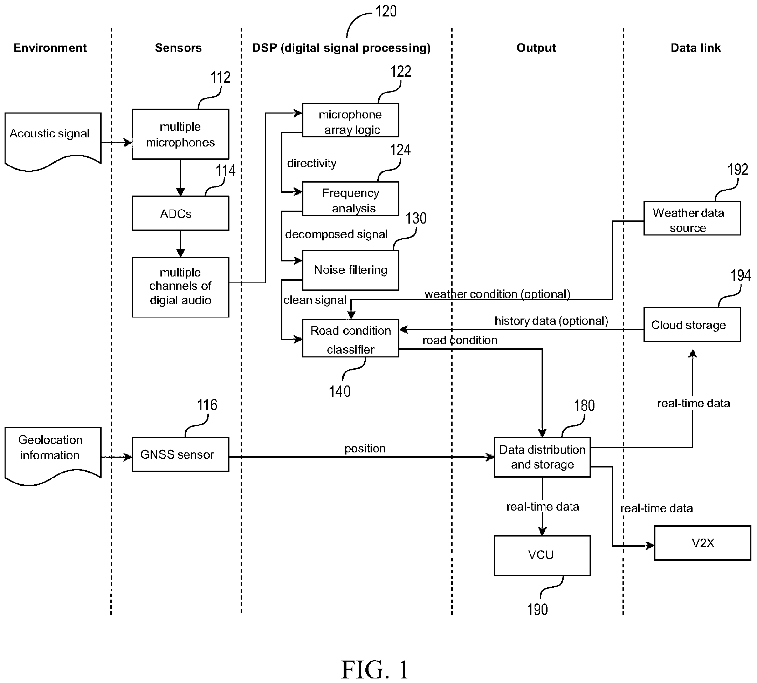

FIG. 1 shows a diagram of a road surface detection system based on some implementations of the disclosed technology. The road surface detection system 100 as shown in FIG. 1 can be installed in a truck. The truck is the example only and the disclosed technology is not limited thereto. For example, the road surface detection system 100 may be implemented in other vehicles, such as cars, motorcycles, buses, boats, airplanes, or robot devices. The truck may operate autonomously or semi-autonomously.

Referring to FIG. 1, the road surface detection system 100 includes one or more sensors, a DSP (digital signal processor) 120, a data distribution and storage 180, a VCU (vehicle control unit) 190. In some implementations, a weather data source 192 and a cloud storage 194 can be further included in the road surface detection system 100. In some other implementations, the weather data source 192 and the cloud storage 194 can be provided outside of the road surface detection system and coupled to the road surface detection system 100 via communication links. In some implementations, the road surface detection system 100 is coupled to various units outside of the truck through V2X (vehicle to everything).

In FIG. 1, the one or more sensors include microphones 112 and GNSS (Global Navigation Satellite System) sensor 116. The multiple microphones 112 are shown as an example of an audio sensor that detects sound signals, e.g., acoustic signals. Without being limited to the microphones, any other audio sensors capable of detecting the sound signals can be included in the road surface detection system 100. The microphones 112 detect audio signals associated with an environment exterior to the truck and inside of the truck. For example, the audio signals associated with the environment exterior to the truck may include sounds generated by tires of the truck on the road, wind sounds, sounds from other vehicles, etc. The audio signals associated with the environment inside of the truck may include sounds from an engine, sounds from internal devices in the truck, sounds from passengers, if any, etc. Some of the audio signals detected by the microphones may be useful to detect the road surface conditions. For example, the sounds generated by tires of the truck on the road can indicate a presence of an obstruction (potholes, gratings, fallen rocks, man-hole coverings, rumble strips, steps, speed bumps, or others) on the road, the road friction condition, the road bump condition, and other various road conditions (e.g., whether the road is icy, slippery, sandy, muddy, and etc).

In FIG. 1, the ADCs 114 are communicatively coupled to the multiple microphones 112 and configured to covert the detected sound signals to electric signals. Although the microphones 112 and the ADCs 114 are separately shown in FIG. 1, the microphones 112 and the ADCs 114 can be provided as one element which detects the audio signals and also converts the detected audio signals to digital audio signals. With the microphones 112 and the ADCs 114, the multiple channels of digital audio signals are provided to the DSP unit 120.

The digital signal processor (DSP) 120 includes a microphone array logic 122, a frequency analysis logic 124, a noise filtering unit 130, and a road condition classifier 140. The microphone array logic 122 is configured to receive the multiple channels of the digital audio signals from the multiple microphones 112 and capable for providing a substantial directivity using a plurality of microphones disposed along an array. In some implementations, the microphone array logic 122 is further capable of performing synchronization and high overload point. The frequency analysis logic 124 is communicatively coupled to the microphone array logic 122 to receive the output signals from the microphone array logic 122. The frequency analysis logic 124 performs the frequency analysis and provide decomposed signals. Various audio processing schemes can be applied in the frequency analysis logic 124 to perform the frequency analysis and provide the decomposed signals.

The noise filtering unit 130 is communicatively coupled to the frequency analysis logic 124 and configured to perform the noise filtering on the decomposed signals received from the frequency analysis logic 124. The decomposed signals may include varus noise signals, for example, road noise, engine noise, noise from other vehicles, wind noise, etc. The noise filtering unit 130 applies the noise filtering algorithms designed to eliminate, reduce or minimize such noises to obtain the desired clean signals.

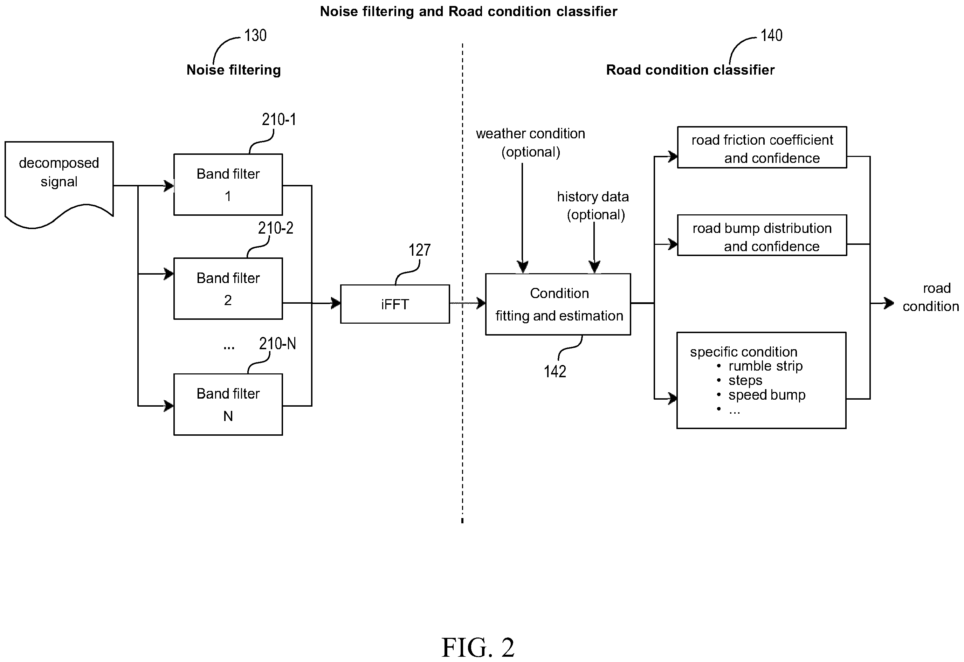

FIG. 2 shows an example of a block diagram including a noise filtering unit and a road condition classifier that are included in the road surface detection system 100 as shown in FIG. 1. Various techniques can be applied to the noise filtering unit 130 to achieve the isolation of the desired clean audio signals representing information that is useful to determine the road surface conditions from the undesired noise signals. In some implementations, the noise filtering unit 130 includes multiple bandpass filters 210-1, 210-2, .... , 210-N. The decomposed signals from the frequency analysis logic 124 are filtered through the bandpass filters 210-1, 210-2, .... , 210-N. The passbands and cut-off frequencies of the filters applied by the noise filtering unit 130 can be predetermined based on the frequency information of the possible noise signals, for example, the road noise, the engine noise, the wind noise, etc. In some implementations, the passbands and cut-off frequencies of the filters applied by the noise filtering unit 130 can be further adapted based on various factors, e.g., weather conditions, location characteristics, traffic conditions, etc. The filtered signals from the noise filtering unit 130 are provided to the road condition classifier 140 after being converted to the time domain from the frequency domain. For example, the inverse FFT (Fast Fourier Transform) 127 is applied to the filtered signals to convert the domain of the filter signals from the frequency domain to the time domain. The filtered signals in the time domain are provided to the road condition classifier 140.

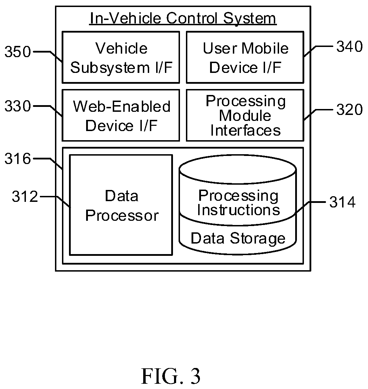

The road condition classifier 140 is communicatively coupled to the noise filtering unit 130 and receives the filtered signals from the noise filtering unit 130. The road condition classifier 140 includes a condition fitting and estimation unit 142 which employs algorithms to determine the road condition based on the filtered signals. Referring to FIGS. 2 and 3, additional data such as weather condition and history data may be provided to the condition fitting and estimation unit 142 to assist the determination of the road condition. In some implementations, the weather condition and the history data are provided from the weather data source 192 and the cloud storage 194, respectively, through the communication link. In some implementations, the weather data source 192 may provide weather conditions in real time. In some implementations, the cloud storage 194 stores history data. By considering such data, for example, the weather condition and the history data, by the condition fitting and estimation unit 142, it is possible to more accurately analysis and estimate the road surface conditions.

In some implementations, the condition fitting and estimation unit 142 employs the algorithms that obtain various road condition parameters. In an example, the road condition parameters include the road friction coefficient and confidence, the road bump distribution and confidence, and other parameters corresponding to specific road surface conditions such as a rumble strip, a step, a speed bump, etc. Based on the road condition parameters, the road condition classifier 140 can determine the road surface condition and provide the determined road surface condition to the data distribution and storage 180.

Referring back to FIG. 2, the data distribution and storage 180 receives the determined road condition from the road condition classifier 140 and the position information obtained by the GNSS sensor 116. In some implementations, the GNSS sensor 116 is configured to obtain geolocation information of the truck. The data distribution and storage 180 can store the determined road condition associated with corresponding location information. The data distribution and storage 180 stores both 1) road surface condition information and 2) corresponding location information as the road surface condition data set. During the driving of the truck, the multiple road surface condition data sets can be stored in the data distribution and storage 180. Each of the multiple road surface condition data sets include the road surface condition information with the corresponding location information.

The data distribution and storage 180 also distributes the stored road surface condition data sets, through various communications, for example, V2X (vehicle to everything), to various units which include a vehicle control unit (VCU) 190, the cloud storage, and/or other various units. The distribution of the road surface condition data sets from the data distribution and storage 180 can proceed in real time. In some implementations, the vehicle control unit 190 can be provided inside the truck or outside the truck. The vehicle control unit 190 can be communicatively coupled to the data distribution and storage 180 through a communication link and configured to receive the road surface condition data sets including the road surface conditions corresponding to the position information.

FIG. 3 shows the example diagram illustrating an vehicle control unit. The vehicle control unit 190 may receive data from the data distribution and storage 180 and use real-time extracted object features obtained from real-time analyses to safely and efficiently navigate and control the vehicle. The real-time scenario analysis can be performed by various manners using machine learning/artificial intelligence (AI) applications that perform various types of data analysis to automate analytical model building. For example, the machine learning/AI applications employ algorithms to evaluate data from the data distribution and storage 180 and suggest recommendations for the control of the truck. The machine learning/AI applications also can consider various real time conditions, including how many vehicles are on the road and weather conditions that can affect to the control of the vehicle. By applying the machine learning/AI applications to the vehicle control unit 190, it is possible to keep improving the algorithms for controlling the vehicle.

The vehicle control unit can be configured to include a data processor 312 for processing data received from the data distribution and storage 180. The data processor 312 can be combined with a data storage device 314 as part of a computing system 316 of the in-vehicle control system. The data storage device 314 can be used to store data, processing parameters, and data processing instructions. A processing module interface 320 can be provided to facilitate data communications between the data processor 312. In various examples, a plurality of processing modules can be provided for execution by data processor 312. Software can be integrated into the in-vehicle control system, optionally downloaded to the in-vehicle control system, or deployed separately from the in-vehicle control system.

The vehicle control unit 190 can be configured to receive or transmit data from/to a wide-area network and network resources connected thereto. A web-enabled device interface 330 can be used by the vehicle control unit 190 to facilitate data communication between the vehicle control unit 190 and the network via one or more web-enabled devices. Similarly, a user mobile device interface 340 can be used by the vehicle control unit 190 to facilitate data communication between the vehicle control unit 190 and the network via one or more user mobile devices. The vehicle control unit 190 can obtain real-time access to network resources via network. The network resources can be used to obtain processing modules for execution by data processor 312, data content to train internal neural networks, system parameters, or other data. The vehicle control unit 190 can include a vehicle subsystem interface 350 that supports communications from the vehicle subsystems, such as the data distribution and storage 180 in FIG. 1, and subsystem that support monitoring or control of vehicle subsystems, including the engine, brakes, steering, transmission, electrical system, emissions system, and interior environment.

By receiving the road surface condition information, the vehicle control unit 190 can help the truck to make the real-time control based on the road surface conditions of the road that the truck is driving. The road surface condition detected at a specific position of the road can be useful for the truck to determine or adjust the driving style (e.g., driving speed) especially when the detected road surface condition can continue for a couple of miles.

In some implementations, the road surface condition data set can be utilized for other vehicles than the truck which receives the corresponding audio signal and determines the road condition based on the audio signal. For example, the road surface condition data set including the road surface condition data stored with corresponding position information can be sent to the cloud storage 194 and stored in the cloud storage 194. The cloud storage 194 can be coupled to other vehicles through the communication link and the stored road surface condition data set can be utilized to assist the driving of the truck or other vehicles. Since the road surface condition data sets are stored by including the corresponding location information, the road surface condition information can be retrieved using a specific location. Thus, another vehicle can request for the road surface condition information corresponding to the specific location through the communication link.

The VCU 190 of the truck can utilize the detected road surface condition to optimize the control of the truck. For example, when there is a pretty bad road surface condition stored for a specific location, the truck can use such road surface condition data to make a recommendation to avoid the specific location for future driving. Thus, in some implementations, the stored road surface condition data can be used to determine a navigation strategy for the truck, e.g., by suggesting a different route without passing the specific location or using another lane if the bad road surface condition exists on a certain lane only. In another example, the stored road surface condition data can be used to control or adjust the driving style based on the stored road surface condition and makes a recommendation, for example, to reduce the speed for the corresponding location.

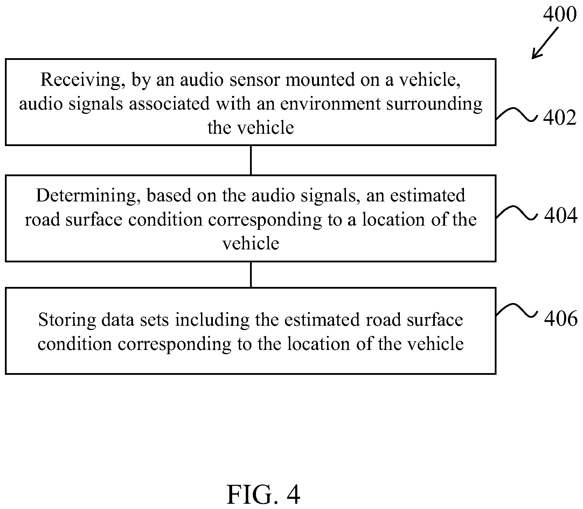

FIG. 4 shows an example method of detecting road surface conditions based on some implementations of the disclosed technology. The method 400 includes, at the operation 402, receiving, by an audio sensor mounted on a vehicle, audio signals associated with an environment surrounding the vehicle. The method 400 further includes, at the operation 404, determining, based on the audio signals, an estimated road surface condition corresponding to a location of the vehicle. The method 400 further includes, at the operation 406, storing data sets including the estimated road surface condition corresponding to the location of the vehicle.

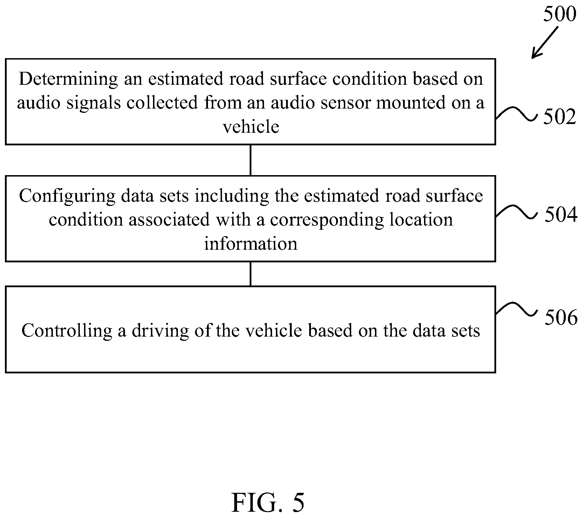

FIG. 5 shows an example method of detecting road surface conditions based on some implementations of the disclosed technology. The method 500 includes, at the operation 502, determining an estimated road surface condition based on audio signals collected from an audio sensor mounted on a vehicle. The method 500 includes, at the operation 504, configuring data sets including the estimated road surface condition associated with a corresponding location information. The method 500 includes, at the operation 506, controlling a driving of the vehicle based on the data sets.

In some implementations, the determining of the estimated road surface condition includes: performing a frequency analysis on the audio signals collected from the audio sensor; removing noise signals from the audio signals; and applying an algorithm to determine road condition parameters including at least one of a road friction coefficient, a road bump distribution, or a specific road condition related parameter. In some implementations, the method 400 or 500 further includes receiving an additional data that includes at least one of weather condition or history data; and wherein the road condition parameters are determined based on the additional data. In some implementations, the method 400 or 500 further includes providing the data sets to an external storage through a communication link. In some implementations, the method 400 or 500 further comprises: obtaining the corresponding location information using a global navigation satellite system installed on the vehicle. In some implementations, the estimated road surface condition includes information relating to at least one of a presence of an obstruction, a road friction, or a road bump distribution. In some implementations, the method 400 or 500 further includes generating a control signal of the vehicle based on the estimated road surface condition associated with the location of the vehicle. In some implementations, the method 400 or 500 further includes communicating in real time with circuitries capable of providing an additional data that includes at least one of weather condition information or history information. In some implementations, the method 400 or 500 further includes receiving, from an external device, a request for the estimated road surface condition for the corresponding location.

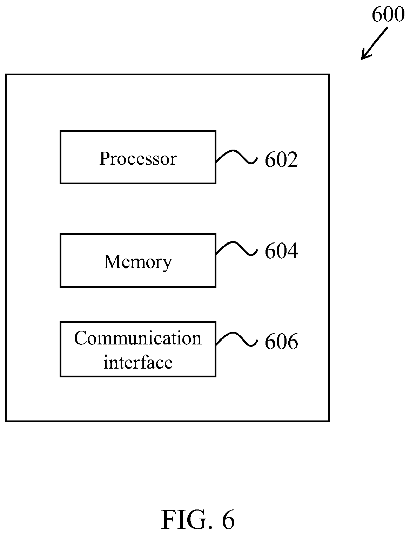

FIG. 6 shows an example of a hardware platform 600 that can be used to implement some of the techniques described in the present document. For example, the hardware platform 600 may implement the method, for example, as shown in FIG. 6 or may implement the various modules described herein. The hardware platform 600 may include a processor 602 that can execute code to implement a method. The hardware platform 600 may include a memory 604 that may be used to store processor-executable code and/or store data. The hardware platform 600 may further include a communication interface 606. For example, the communication interface 606 may implement automotive ethernet and/or controller area network (CANbus).

Embodiments of the disclosed technology include a non-transitory computer-readable program storage medium having instructions stored thereon, the instructions, when executed by a processor, causing the processor to perform the method as shown in FIGS. 4 and 5.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. In some implementations, however, a computer may not need such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described and other implementations, enhancements and variations can be made based on what is described and illustrated in this patent document.

The following numbered items are disclosed herein:
1. A system installed in a vehicle, comprising:
   an audio sensor configured to receive audio signals associated with an environment surrounding the vehicle; a location sensor configured to detect a location of the vehicle; a digital signal processor communicatively coupled to the audio sensor and configured to estimate an estimated road surface condition based on the audio signals received from the audio sensor; a data storage communicatively coupled to the digital signal processor and the location sensor and configured to store the estimated road surface condition with corresponding location information; and a control element communicatively coupled to the data storage and configured to control a driving of the vehicle based on the estimated road surface condition.
2. The system of item 1, wherein the audio sensor corresponds to microphones that are coupled to analog digital converters configured to convert the audio signals to electric signals.
3. The system of item 1 or 2, wherein the digital signal processor includes a noise filtering unit including multiple band pass filters whose passbands and cut off frequencies are predetermined or adapted to remove noise signals from the audio signals.
4. The system of any preceding item, wherein the digital signal processor includes a road condition classifier employing algorithms to obtain road condition parameters including at least one of a road friction coefficient, a road bump distribution, or a specific road condition related parameter.
5. The system of item 4, wherein the digital signal processor is communicatively coupled to a weather data source capable of providing weather information and further configured to obtain the road condition parameters based on the weather information and the history data.
6. The system of item 4, wherein the digital signal processor is communicatively coupled to a cloud storage storing history data and further configured to obtain the road condition parameters based on the history data.
7. The system of any preceding item, wherein the data storage is communicatively coupled to an external storage outside of the vehicle and distributes the estimated road surface condition with corresponding location information to the cloud storage.
8. The system of any preceding item, wherein the control element includes an artificial intelligence algorithm applied to provide the control signal.
9. The system of any preceding item, wherein the control element is configured to change a driving speed of the vehicle or change a travel route of the vehicle.
10. A method of detecting a road surface condition, comprising:
   determining an estimated road surface condition based on audio signals collected from an audio sensor mounted on a vehicle; configuring data sets including the estimated road surface condition associated with a corresponding location information; and controlling a driving of the vehicle based on the data sets.
11. The method of item 10, wherein the determining of the estimated road surface condition includes: performing a frequency analysis on the audio signals collected from the audio sensor; removing noise signals from the audio signals; and applying an algorithm to determine road condition parameters including at least one of a road friction coefficient, a road bump distribution, or a specific road condition related parameter.
12. The method of item 11, further comprising: receiving an additional data that includes at least one of weather condition or history data; and wherein the road condition parameters are determined based on the additional data.
13. The method of any of items 10 to 12, further comprising: providing the data sets to an external storage through a communication link.
14. The method of any of items 10 to 13, further comprising:
   obtaining the corresponding location information using a global navigation satellite system installed on the vehicle.
15. The method of any of items 10 to 14, wherein the estimated road surface condition includes information relating to at least one of a presence of an obstruction, a road friction, or a road bump distribution.
16. The method of any of items 10 to 15, wherein the vehicle is an autonomous or semi-autonomous.
17. The method of any of items 10 to 16, further comprising receiving the audio signals from an audio sensor, wherein the audio signals are associated with an environment surrounding the vehicle; receiving the location information from a location sensor configured to detect a location of the vehicle; storing, in a data storage, the estimated road surface condition with corresponding location information.
18. A system of detecting a road surface condition, the system comprising:
   a processor; and a memory that comprises instructions stored thereon, wherein the instructions, when executed by the processor, configure the processor to: collect audio signals associated with an environment surrounding the vehicle; determine, based on the audio signals, an estimated road surface condition corresponding to a location of the vehicle; and store data sets including the estimated road surface condition associated with corresponding location information.
19. The system of item 18, wherein the instructions further configure the processor to communicate with a controller in the vehicle to generate a control signal of the vehicle based on the estimated road surface condition associated with the location of the vehicle.
20. The system of item 18 or 19, wherein the instructions further configure the processor to communicate in real time with circuitries capable of providing an additional data that includes at least one of weather condition information or history information.
21. The system of any of items 18 to 20, wherein the instructions further configure the processor to receive, from an external device, a request for the estimated road surface condition for the corresponding location.

## Claims

1. A system installed in a vehicle, comprising:
an audio sensor configured to receive audio signals associated with an environment surrounding the vehicle;
a location sensor configured to detect a location of the vehicle;
a digital signal processor communicatively coupled to the audio sensor and configured to estimate an estimated road surface condition based on the audio signals received from the audio sensor;
a data storage communicatively coupled to the digital signal processor and the location sensor and configured to store the estimated road surface condition with corresponding location information; and
a control element communicatively coupled to the data storage and configured to control a driving of the vehicle based on the estimated road surface condition.

2. The system of claim 1, wherein the audio sensor corresponds to microphones that are coupled to analog digital converters configured to convert the audio signals to electric signals.

3. The system of claim 1 or claim 2, wherein the digital signal processor includes a noise filtering unit including multiple band pass filters whose passbands and cut off frequencies are predetermined or adapted to remove noise signals from the audio signals.

4. The system of any preceding claim, wherein the digital signal processor includes a road condition classifier employing algorithms to obtain road condition parameters including at least one of a road friction coefficient, a road bump distribution, or a specific road condition related parameter.

5. The system of claim 4, wherein the digital signal processor is communicatively coupled to a weather data source capable of providing weather information and further configured to obtain the road condition parameters based on the weather information and the history data.

6. The system of claim 4, wherein the digital signal processor is communicatively coupled to a cloud storage storing history data and further configured to obtain the road condition parameters based on the history data.

7. The system of any preceding claim, wherein the data storage is communicatively coupled to an external storage outside of the vehicle and distributes the estimated road surface condition with corresponding location information to the cloud storage.

8. The system of any preceding claim, wherein the control element includes an artificial intelligence algorithm applied to provide the control signal.

9. The system of any preceding claim, wherein the control element is configured to change a driving speed of the vehicle or change a travel route of the vehicle.

10. A method of detecting a road surface condition, comprising:
determining an estimated road surface condition based on audio signals collected from an audio sensor mounted on a vehicle;
configuring data sets including the estimated road surface condition associated with a corresponding location information; and
controlling a driving of the vehicle based on the data sets.

11. The method of claim 10, wherein the determining of the estimated road surface condition includes:
performing a frequency analysis on the audio signals collected from the audio sensor;
removing noise signals from the audio signals; and
applying an algorithm to determine road condition parameters including at least one of a road friction coefficient, a road bump distribution, or a specific road condition related parameter.

12. The method of claim 11, further comprising:
receiving an additional data that includes at least one of weather condition or history data; and
wherein the road condition parameters are determined based on the additional data.

13. The method of any of claims 10 to 12, further comprising:
providing the data sets to an external storage through a communication link.

14. The method of any of claims 10 to 13, wherein the estimated road surface condition includes information relating to at least one of a presence of an obstruction, a road friction, or a road bump distribution.

15. A computer readable storage medium including code that, when executed by a processor, causes the processor to perform the method of any of claims 10 to 14.
